# EUROPÄISCHE PATENTSCHRIFT

(11) **EP 0 603 559 B1**
(45) Veröffentlichungstag und Bekanntmachung des Hinweises auf die Patenterteilung: **09.10.1996**
(21) Anmeldenummer: 93118808.0
(22) Anmeldetag: 23.11.1993
(51) Int. Cl.: B60D 1/52

(54) **Abnehmbare Anhängerkupplung**
Removable trailer coupling
Attelage de remorque amovible

(30) Priorität: 22.12.1992 DE 4243552
(43) Veröffentlichungstag der Anmeldung: 29.06.1994
(73) Patentinhaber: PEKA-Fahrzeugbau GmbH & Co. KG, 76185 Karlsruhe (DE)
(72) Erfinder: Rimmelspacher, Bernhard, Dipl.-Ing., D-76287 Rheinstetten-Mörsch (DE); Agsten, Günther, D-76776 Neuburg (DE)
(74) Vertreter: Schuster, Gregor, Dipl.-Ing.

(56) Entgegenhaltungen:
- EP-A- 0 037 572
- EP-A- 0 301 153
- DE-U- 9 209 447
- FR-A- 2 390 304

## Beschreibung

Die Erfindung betrifft eine abnehmbare Anhängerkupplung, insbesondere für Personenkraftwagen, mit am Fahrzeugheck bevorzugt verdeckt zu montierendem Halteteil für die lösbare Befestigung des Schaftes einer mit Kupplungskugel versehenen Kugelstange, die Arretierglieder aufweist einschließlich einer entlang dem Schaft geführten unter Federbelastung in Richtung Schaftende stehenden Schubstange, wobei der Kugelstangenschaft eine quer zu seiner Längsachse verlaufende, eine entsprechende Arretierfläche des Halteteils hintergreifende Verspannfläche besitzt, und die Schubstange auf der dieser Arretierfläche gegenüberliegenden Seite des Schaftes angeordnet ist und einen in Federbelastungsrichtung auf eine Gegenfläche des Halteteils auflaufenden, zum Schubstangenende sich verjüngenden Kopf mit einer Keilfläche aufweist.

Derartige Anhängerkupplungen sind aus der Deutschen Gebrauchsmusterschrift G 92 09 447.3 und in ähnlicher Form auch aus der europäischen Patentschrift 0 223 996 bekannt geworden. Diese Anhängerkupplungen sind insofern noch verbesserungsfähig, als zu ihrer Herstellung sehr enge Toleranzen und relativ viele Einzelteile erfordert.

Problem bzw. Aufgabe der Erfindung liegen darin, die vorgenannten Nachteile des Standes der Technik zu vermeiden und bei ungeschmälerter Zuverlässigkeit und Lebensdauer fertigungstechnische Vorteile zu erzielen durch die Verwendung einer geringeren Anzahl von Teilen, die bezüglich Form und Toleranzansprüchen günstiger herstellbar sind.

Diese Aufgabe wird bei einer Anhängerkupplung der eingangs genannten Art gemäß dem Kennzeichen des Anspruchs 1 gelöst.

Diese Lösung enthält drei Hauptvarianten: Die erste Variante besteht darin, daß die beiden Seitenwangen des Halteteils oberhalb des Kugelstangenschaftes durch ein Querblech verbunden sind und unterhalb durch einen etwa mittig angeordneten Querbolzen. Dieser Querbolzen wird dann in Betriebsposition des Schaftes von einer in diesen eingelassenen Ausnehmung umgriffen. Er nimmt sowohl Zug- als auch Druckbelastungen auf und besitzt demgemäß zwei (sich etwa gegenüberliegende) Wirkflächen, wobei die Wirkfläche, welche die Zugkräfte aufnimmt, als Arretierfläche bezeichnet wird.

Die zweite Variante besteht darin, daß die beiden Seitenwangen beidseitig des eingesetzten Schaftes durch ein Querblech verbunden sind. Der Querbolzen ist nunmehr am Kugelstangenschaft angebracht bzw. eine entsprechende Arretierfläche angeformt, die von einer in einem der Querkörper bzw. -bleche vorgesehenen Ausnehmung in Betriebsposition umgriffen ist.

Eine dritte, besonders vorteilhafte Variante besteht darin, daß das vorzugsweise oberhalb des Schaftes die beiden Seitenwangen verbindende Querblech durch zwei einzelne Querkörper ersetzt wird, deren beide zur Verkeilung wirksamen Gegenflächen bzw. Unterseiten mit der gegenüberliegenden Arretier- bzw. Verspannfläche ein Dreieck bilden. Dabei kann es sich insbesondere um Rundbolzen handeln, wobei es ausreicht, wenn die Schubstange so ausgebildet ist, daß sie nur an einem der beiden Querbolzen zur Anlage kommt und die zweite Gegenfläche durch direktes Anliegen des Schaftes am zweiten Querbolzen gebildet ist.

Wenn hier von "oberhalb" und "unterhalb" gesprochen wird, so gilt dies für eine bevorzugte Ausführungsform, bei der der Kugelstangenschaft etwa waagrecht in dem entsprechend gestalteten Halteteil endet. Grundsätzlich ist es jedoch möglich, unten und oben zu vertauschen. In jedem Fall sollte die Schubstange auf der der Arretierung durch Bolzen und Ausnehmung gegenüberliegenden Seite des Kugelstangenschaftes angeordnet sein. Dies gilt auch für die Variante, daß der Kugelstangenschaft nicht waagrecht, sondern schräg nach oben oder vertikal in das Halteteil mündet. In diesem Fall empfiehlt es sich, die Verspannung durch Querbolzen und Ausnehmung heckseitig und die Schubstange zwecks bequemerer Entriegelung anhängerseitig vorzusehen - Jedenfalls ist das erfinderische Prinzip gemäß dem Hauptanspruch auf alle vorgenannten Varianten anwendbar. Weitere Nebenvarianten ergeben sich durch entsprechende Kombinationen der Unteransprüche.

Dabei empfiehlt es sich, die Keilfläche der Schubstange ggf. durch eine im Mittelbereich vorgesehene Vertiefung so zu gestalten, daß sie in Betriebsposition nur in ihrem vorderen und hinteren Bereich an der Unterseite des Querblechs anliegt. Dies ermöglicht die Zulassung größerer Toleranzen bei gleicher Betriebssicherheit. Derselbe Vorteil ergibt sich, wenn bezüglich Querbolzen und zugehöriger Ausnehmung so verfahren wird, daß man den Querbolzen abflacht und die zugehörige Ausnehmung so ausbildet, daß sie keine komplette, sondern nur eine vordere und hintere Auflagefläche in Betriebsposition bildet. Eine Ausnehmung mit trapezförmigem Querschnitt erreicht dieses Ziel auf besonders einfache Weise.

Die Schubstange ist in der Regel wie im Falle der obengenannten Gebrauchsmusterschrift selbstnachstellend gestaltet. Da sie bei der Hauptvariante gemäß der Erfindung nicht unten liegt, ist insoweit eine Verschmutzungsgefahr weniger kritisch bzw. ein Abdeckblech entbehrlich. Auch ist das Entriegelungsorgan besser zugänglich.

Auch zur obengenannten europäischen Patentschrift bestehen deutliche und vorteilhafte Unterschiede. So entfallen die seitlich vom Schaft abstehenden, einen Anschlag bildenden Bolzen, und das Halteteil braucht nicht als fertigungsintensive Hülse ausgebildet zu werden.

Bezüglich Material und Herstellung des Halteteils sei zusätzlich noch auf die deutsche Gebrauchsmusterschrift 92 00 287 verwiesen. Da die Anschlagflächen gemäß der obengenannten europäischen Patentschrift entfallen, kann statt Edelstahl ein kostengünstigeres Material für die Seitenwangen benutzt werden. Geeignete Abmessungen ergeben sich ebenfalls aus der Gebrauchsmusterschrift 92 00 287.

Im folgenden wird die Erfindung anhand eines Ausführungsbeispieles näher erläutert, aus dem sich weitere Merkmale und Vorteile der Erfindung ergeben. In der zugehörigen Zeichnung zeigen:
Fig. 1 einen senkrechten mittigen Schnitt durch Halteteil und Kugelstangenschaft in Betriebsposition;
Fig. 2 und 3 Detailabwandlungen der Fig. 1 betreffend die Arretierung des Schaftes;
Fig. 4 und 5 einen Schnitt durch ein abgewandeltes Halteteil mit Schrägeinführung des Schaftes;
Fig. 6 einen versetzten Querschnitt gemäß der in Figur 1 eingetragenen Schnittlinie 6-6.

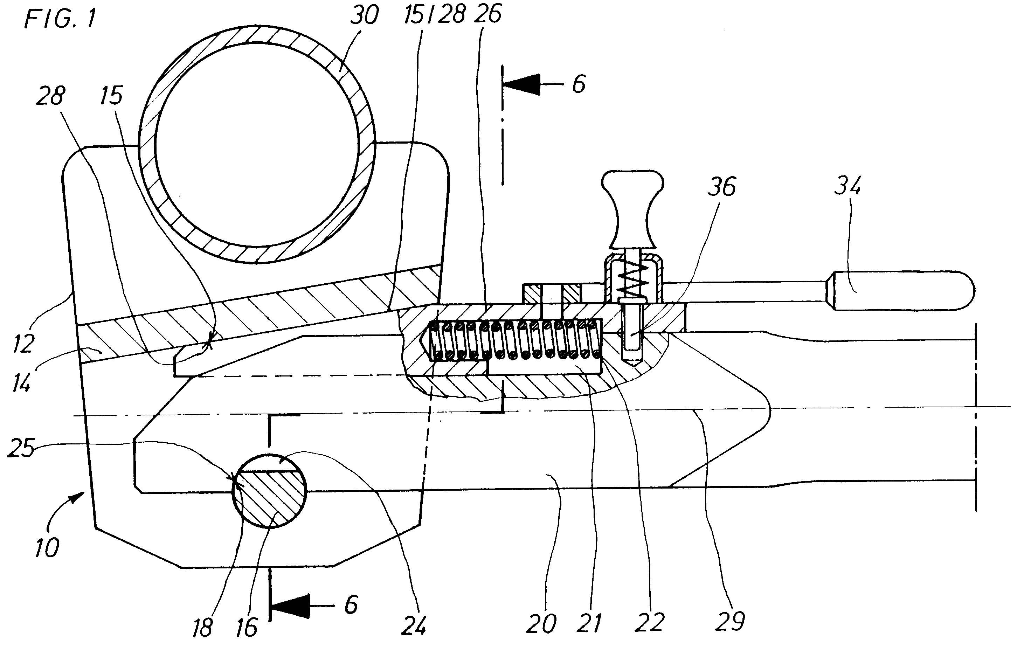

Figur 1 gibt im einzelnen eine Übersicht über alle erfindungswesentlichen Einzelteile. Links im Bild sieht man das Halteteil 10. Dabei sieht man auf die hintere Seitenwange 12, das geschnittene (obere) Querblech 14, das die beiden Wangen 12 verbindet, und unten im Bild sieht man unterhalb des eingeschobenen und arretierten Kugelstangenschaftes 20 den Querbolzen 16. Er ist bevorzugt mit einer Abflachung versehen, um den Kugelstangenschaft leichter in die Betriebsposition einführen zu können, ansonsten weist er einen runden Querschnitt auf.

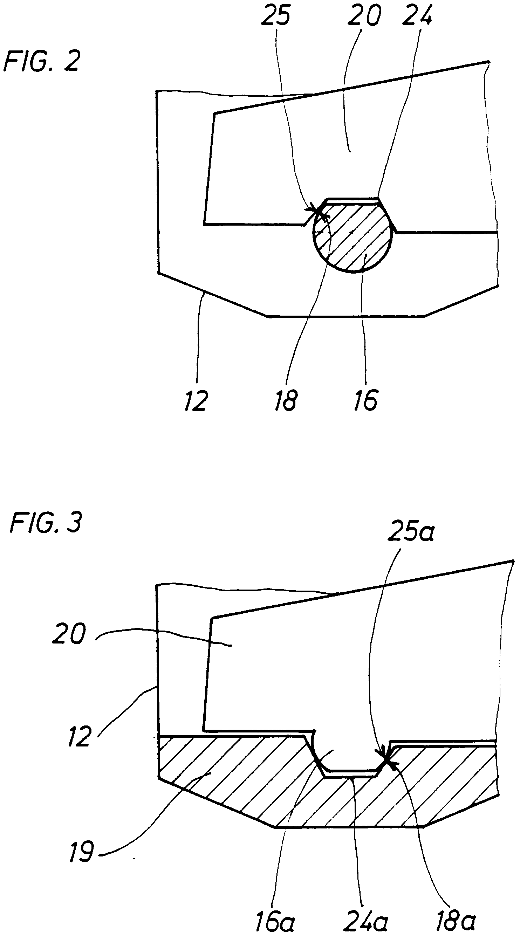

Wird die erste Hauptvariante (vgl. vorne) gewählt, so liegt die Ausnehmung 24 oberhalb der Unterkante des Schaftes 20. Dasselbe gilt für die Verspannfläche 25. Dabei kann es sich empfehlen, die Ausnehmung, die in Fig. 1 halbkreisförmig dargestellt ist, trapezförmig zu wählen gemäß Fig. 2. Die bolzenseitige Arretierfläche 18, welche die Zugkräfte aufnimmt, liegt dann links oberhalb der Unterkante des Schaftes 20; rechts oberhalb der Schaftunterkante liegt die zweite vorne erwähnte Wirkfläche des Bolzens 16, welche die anhängerseitigen Druckkräfte aufnimmt.

Wählt man die zweite Variante, so gilt die Figur 3. Hier ist nun der Querbolzen 16 ersetzt durch eine entsprechende Anformung 16a am Schaft 20, die nach unten in die Ausnehmung 24a des unteren Querbleches 19 hineinragt. Da der Schaft wie im Falle der Fig. 1 und 2 auch im Falle der Fig. 3 (unter Zugkraft) versucht, der schubstangenseitigen Verkeilung 15/28 durch Verlagerung nach rechts im Bild auszuweichen, liegt diesmal die Arretierfläche 18a rechts unterhalb der Schaftunterkante.

Die Schubstange 26 ist auf der dem Querbolzen 16 und der zugehörigen Ausnehmung 24 gegenüberliegenden Seite im Falle Figur 1 oberhalb des Schaftes 20 angeordnet. Die Schubstange 26 ist entlang dem Schaft 20 verschiebbar gelagert, wofür bevorzugt eine Nut im Schaft vorgesehen sein kann. Eine im Freiraum 21 befindliche Spiralfeder 22 drückt die Schubstange 26 ständig in Betriebsposition in Richtung Schaftende bzw. gegen die eine Gegenfläche zur Arretierfläche 18 bildende Unterseite 15 des Querblechs 14. Dabei ist ein freies Austreten der Schubstange am Ende des Kugelstangenschaftes nicht erforderlich. Auch ist es günstig, wenn die Verkeilung zwischen der Schubstangen-Keilfläche 28 und der Unterseite 15 des Querbleches 14 gegenüber dem Querkörper 16 bzw. 16a nicht vollflächig erfolgt, sondern durch eine entsprechende geometrische Gestaltung von Unterseite 15 und Keilfläche 28 eine vordere und hintere definierte Zone der Verkeilung (15/28) bewirkt ist, also gewissermaßen eine Zweiteilung der Gegenfläche.

Die Bewegungsachse der Schubstange 26 braucht nicht parallel zur Achse 29 des Schaftes 20 zu verlaufen, wie in Fig. 1 gezeichnet. Eine Neigung nach links unten im Bild hat den Vorteil, daß sich eine noch bessere Verkeilung der Kugelstange während des Betriebes und damit ein festerer Sitz ergibt.

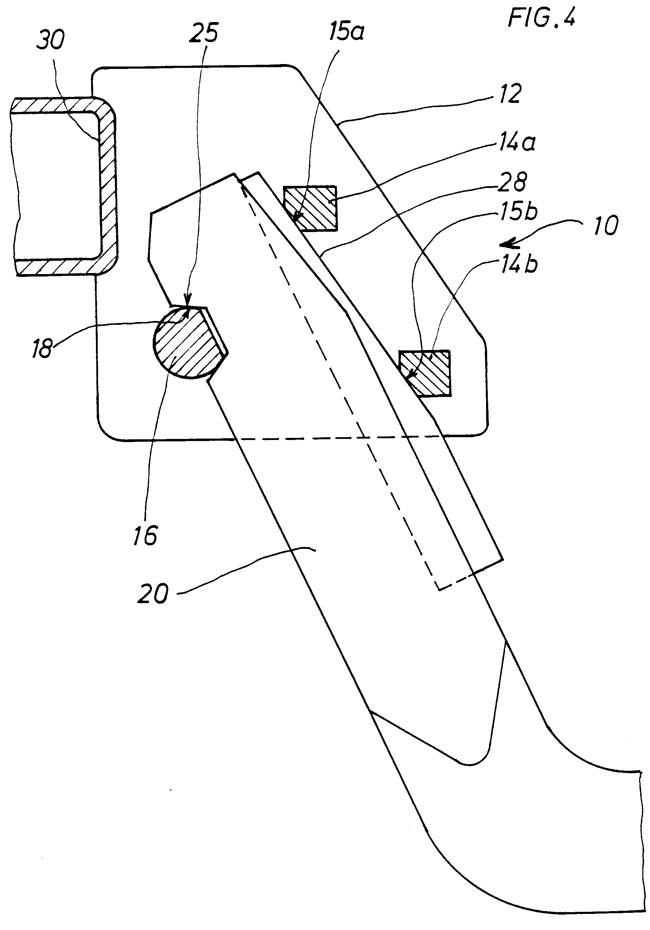

Fig. 4 zeigt eine weitere bevorzugte Ausführungsform der Erfindung mit einer beispielsweise abgewinkelten Kugelstange, deren Schaft 20 schräg oder sogar vertikal in das Halteteil 10 eingeschoben wird, wobei letzteres nicht so bedienungsfreundlich ist. Die Begriffe "unter - und oberhalb" des Schaftes 20 wären dann eher in "vorne und hinten" zu ändern, ohne daß damit der Bereich der Erfindung verlassen würde.

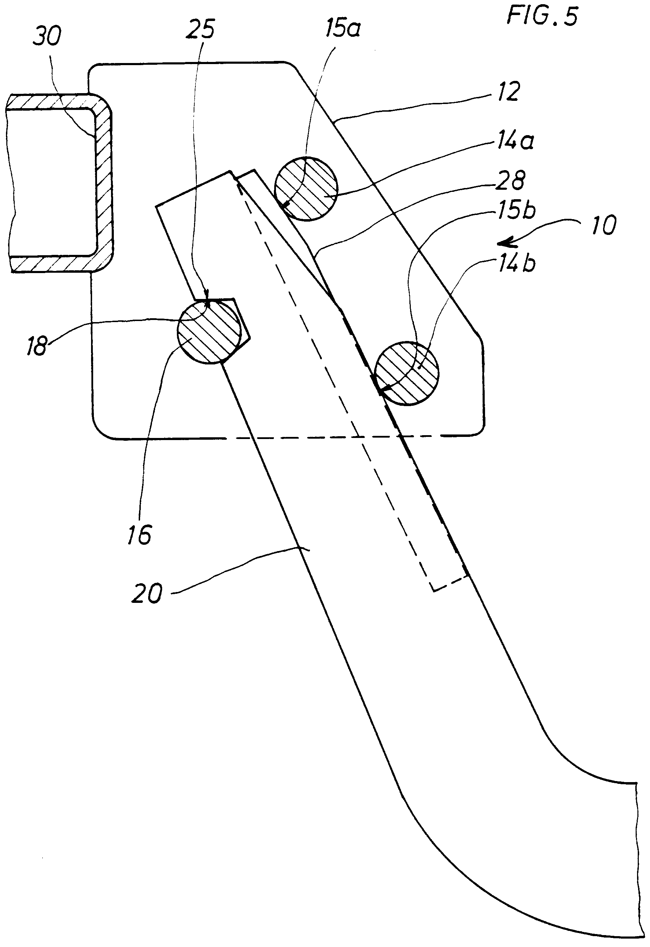

Figur 5 zeigt eine wichtige Variante von Fig. 4. Zur Bildung der Gegenflächen 15a, 15b werden Rundbolzen verwendet. Die Schubstange 26 verläuft in einer trapezförmigen Nut des Schaftes 20, wobei sie erst im Bereich des heckseitigen Bolzens 14a die Außenkonturen des Schaftes 20 überragt. Dementsprechend liegt die Schubstange 26 am Bolzen 14a, dagegen am Bolzen 14b der Schaft 20 an. Diese Variante weist eine besonders ausgeprägte Selbstarretierung auf.

Der Kugelstangenschaft kann-wie gezeigt - einen runden oder einen viereckigen Querschnitt aufweisen. Bei trapezförmiger Querschnittsgestaltung lassen sich die Querkräfte besonders gut aufnehmen.

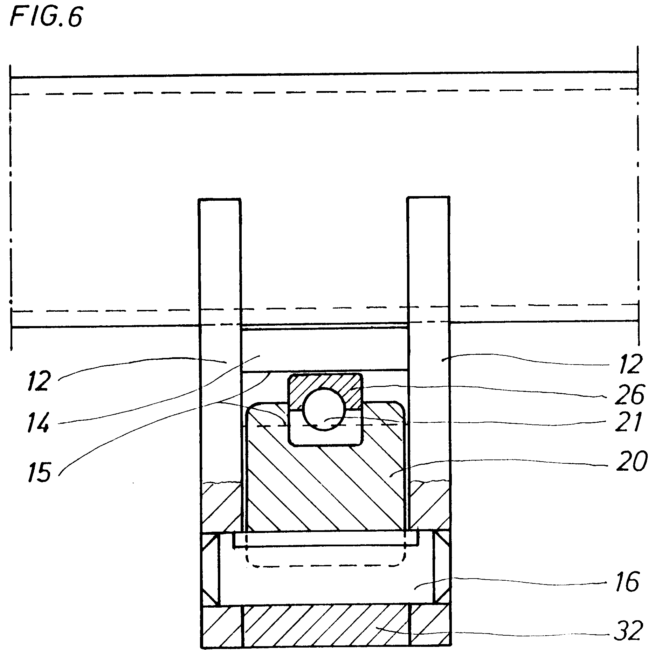

Figur 6 zeigt einen Schnitt gemäß der in Figur 1 eingezeichneten Schnittlinie 6-6. Wie ersichtlich ist hier die erste Hauptvariante der Erfindung wiederum in Betriebsposition dargestellt. Die beiden Wangen 12 sind mit dem Querblech 14 verbunden, dessen Unterseite 15 samt seinem schrägen Verlauf angedeutet ist. Die Feder wurde in den Freiraum 21 nicht eingezeichnet. Der Querbolzen 16 ist zwecks Verbindung der beiden Wangen mit diesem verschweißt.

Wird anders als in Fig. 1, 2 und 6 anstelle des Querbolzens 16 zur Verbindung der Seitenwangen 12 gemäß Fig. 3 ein weiteres Querblech 19 verwendet bzw. eingeschweißt, dann wird der Bolzen an den Schaft angebracht. Dabei kann es sich um das Anschweißen eines Halbzeugs mit halbkeisförmigem oder abgeflachtem Querschnitt handeln. Die Funktion eines Bolzens könnte dann auch eine angeformte Erhebung von geeignetem Querschnitt sein. Wichtig ist noch der Hinweis, daß diese Erhebung bzw. dieser schaftseitig angebrachte Bolzen 16a nicht seitlich vom Schaft absteht wie im Falle der als Stand der Technik einleitend genannten beiden Schriften. Sollte mit großen Quermomenten zu rechnen sein, kann diesen durch entsprechende Breiten-Dimensionierung von Schaft 20 und Halteteil 10 Rechnung getragen werden.

Im folgenden soll noch die Funktionsweise etwas näher beschrieben werden, wobei Einzelheiten auf die früher genannten vorveröffentlichten Schriften verwiesen werden kann. Hierbei wird von Figur 1 und der Betriebsposition ausgegangen. Zwecks Entnahme des Kugelstangenschaftes 20 wird zunächst der Sicherungsgriff samt Sicherungsstift 36 im Bild nach oben gegen die Federkraft gezogen. Damit läßt sich die Schubstange 26 mittels Verschwenken des Entriegelungshebels 34 zurück- bzw. nach rechts im Bild verschieben. Es kann sich dabei um ein Entriegelungsorgan handeln, wie es in Figur 2 der Deutschen Gebrauchsmusterschrift G 92 09 447 gezeigt ist. Eleganter aber auch aufwendiger ist ein einziges Stellorgan, nämlich ein multifunktionaler Drehknopf gemäß der Deutschen Gebrauchsmusterschrift 91 05 268.

Einzelheiten zur Bedienung und Entriegelung, die kein Bestandteil der Erfindung sind, können aus den vorgenannten beiden Gebrauchsmusterschriften entnommen werden.

Sobald die Schubstange 26 ausreichend zurückgezogen ist, ist es möglich, die Kugelstange am Schaft vorne etwas anzuheben und um den Bolzen 16 zu verschwenken, wobei die Flächen 18 und 25 sich voneinander lösen und der Kugelstangenschaft 20 nach rechts im Bild entnommen werden kann.

Im Falle des Einsetzens wird umgekehrt verfahren: Die Kugelstange wird schräg von oben bei zurückgezogener Schubstange 26 eingeführt. Sobald der Querbolzen 16 von der Ausnehmung 24 umgriffen ist, kann die Schubstange 26 unter Federbelastung nach vorne schnellen und der Sicherungsstift 36 wird in die entsprechenden Bohrungen von Schubstange 26 und Schaft 20 eingeführt.

### Bezugszeichenliste

- 10: Halteteil
- 12: Seitenwangen
- 14: Querblech
- 14a,14b: Querkörper
- 15: Unterseite (von Teil 14)
- 15a,15b: Unterseite bzw. Gegenflächen (der Teile 14a,14b)
- 16: Querbolzen
- 16a: Querkörper (an Schaft)
- 18,18a: Arretierfläche
- 19: zweites Querblech
- 20: Schaft (der Kugelstange)
- 21: Freiraum (für Teil 22)
- 22: Spiralfeder
- 24: Ausnehmung (im Teil 20)
- 24a: Ausnehmung (im Teil 19)
- 25,25a: Verspannfläche
- 26: Schubstange
- 28: Keilfläche
- 29: Schaftachse
- 30: heckseitiges Anschlußstück
- 32: Bodenblech
- 34: Entriegelungshebel
- 36: Sicherungstift mit Griff

## Patentansprüche

1. Abnehmbare Anhängerkupplung, insbesondere für Personenkraftwagen, mit am Fahrzeugheck bevorzugt verdeckt zu montierendem Halteteil (10) für die lösbare Befestigung des Schaftes (20) einer mit Kupplungskugel versehenen Kugelstange, die Arretierglieder aufweist einschließlich einer entlang dem Schaft (20) geführten, unter Federbelastung in Richtung Schaftende stehenden Schubstange (26), wobei der Kugelstangenschaft (20) eine quer zu seiner Längsachse verlaufende, eine entsprechende Arretierfläche (18,18a) des Halteteils (10) hintergreifende Verspannfläche besitzt, und die Schubstange (26) auf der dieser Arretierfläche (18, 18a) gegenüberliegenden Seite des Schaftes (20) angeordnet ist und einen in Federbelastungsrichtung auf eine Gegenfläche (15, 15a, 15b) des Halteteils (10) auflaufenden, zum Schubstangenende sich verjüngenden Kopf mit einer Keifläche (28) aufweist, dadurch gekennzeichnet,
(a) daß das Halteteil (10) halbzeugartig aus zwei mit Querkörpern (14, 16) zusammengehaltenen Seitenwangen (12) aufgebaut ist, die den eingesetzten Schaft (20) an zwei Seiten führen;
(b) daß ein erster als Halbzeug die Seitenwangen (12) verbindender Querkörper vorgesehen ist in Form eines etwa mittig angeordneten Rundbolzens (16) oder in Form eines eine Ausnehmung (24a) aufweisenden Querbleches (19) - vorzugsweise jeweils unterhalb des aufzunehmenden Schaftes verlaufend -, wobei der Querkörper eine Arretierfläche (vgl. 18, 18a) bildet, die in Wirkverbindung steht mit einer entsprechend gestalteten, ebenfalls quer zur Längs- und Bewegungsrichtung des Schaftes (20) an diesem verlaufenden durch eine Ausnehmung (24) oder Ausstülpung (16a) gebildete Verspannfläche (25, 25a);
(c) daß die Schubstange (26) mit ihrer Keilfläche (28) in Betriebsposition an einem zweiten, ebenfalls als Halbzeug die Seitenwangen (12) verbindenden - vorzugsweise oberhalb des aufzunehmenden Schaftes verlaufenden - Querkörper (14, 14a, 14b) an mindestens einer entsprechenden Gegenfläche (15, 15a, 15b) anliegt.

2. Anhängerkupplung nach Anspruch 1, dadurch gekennzeichnet, daß ein Querkörper als Querblech (14) ausgebildet ist und die Keilfläche (28) der Schubstange (26) in Betriebsposition nur im vorderen und hinteren Bereich an der Unterseite (15) des Querblechs (14) anliegt.

3. Anhängerkupplung nach Anspruch 1 oder 2, dadurch gekennzeichnet, daß die Bewegungsachse der Schubstange (26) nicht parallel zur Achse (29) des Schaftes (20) verläuft, sondern zu dieser geneigt ist.

4. Anhängerkupplung nach einem der Ansprüche 1 bis 3, dadurch gekennzeichnet, daß anstelle des Querblechs (14) zwei Querbolzen (14a, 14b) mit zwei zur Keilfläche (28) korrespondierenden Gegenflächen (15a, 15b) vorgesehen sind (Vgl. Fig. 4).

5. Anhängerkupplung nach Anspruch 4, dadurch gekennzeichnet, daß Rundbolzen vorgesehen sind.

6. Anhängerkupplung nach einem der Ansprüche 1 bis 3, dadurch gekennzeichnet, daß die Seitenwangen (12) entlang der restlichen beiden Seiten des Schaftes (20) durch je ein Querblech (14, 19) miteinander verbunden sind, wobei das eine Querblech (19) eine Ausnehmung (24a) besitzt, die den in diesem Fall am Schaft (20) vorgesehenen Querkörper (16a) in Betriebsposition umgreift. (Vgl. Fig. 3).

7. Anhängerkupplung nach einem der vorangehenden Ansprüche, dadurch gekennzeichnet, daß der der Schubstange (26) gegenüberliegende Querkörper (16,16a) mit teilkreisförmigem Querschnitt und Abplattung ausgebildet ist und von einer Ausnehmung (24, 24a) im Schaft (20) mit etwa halbkreisförmigem Querschnitt umgriffen ist. (Vgl. Fig. 1).

8. Anhängerkupplung nach Anspruch 7, dadurch gekennzeichnet, daß der Querkörper (16, 16a) unter Bildung von einer vorderen und hinteren bzw. oberen und unteren Anlagefläche von einer Ausnehmung (24, 24a) mit trapezförmigem (statt halbkreisförmigem) Querschnitt umgriffen ist. (Vgl. Fig. 2,3 u. 4).

9. Anhängerkupplung nach einem der Ansprüche 4 oder 5, dadurch gekennzeichnet, daß die Schubstange (26) in Betriebsposition nur an einem der Querbolzen (14a, 14b) anliegt, bevorzugt am Querbolzen (14a) unter Bildung einer ersten Gegenfläche (15a), während eine zweite Gegenfläche (15b)durch direktes Anliegen des Schaftes (20) am zweiten Querbolzen gebildet ist (Vgl. Fig. 5).

10. Anhängerkupplung nach Anspruch 9, dadurch gekennzeichnet, daß die Schubstange (26) erst im Bereich des Schaftendes die Aussenkontur des Schaftes (20) überragt.

11. Anhängerkupplung nach einem der vorangehenden Ansprüche, dadurch gekennzeichnet, daß die Schubstange (26) und die ihr zugeordnete Nut im Schaft (20) jeweils einen trapezförmigen Querschnitt aufweisen.

12. Anhängerkupplung nach einem der vorangehenden Ansprüche, dadurch gekennzeichnet, daß der Kugelstangenschaft (20) als Vierkant ausgebildet ist.

## Claims

1. Detachable trailer coupling especially for passenger vehicles with a mounting support (10) to be attached - preferably concealed - to the rear of the vehicle for the releasable attachment of the stem (20) of a knee-joint bar featuring locking devices including a push rod (26) guided alongside the stem (20) and spring-loaded versus the stem end with the stem of the knee-joint bar (20) featuring a bracing face, positioned at right angles to its longitudinal axis, which interlocks with a corresponding locking face (18,18a) on the mounting support (10), the push rod (26) being situated opposite this locking face (18,18a) and featuring a head with a wedge surface (28) tapering towards the end of the push rod and abutting to a surface on the mounting support (10) along the spring load, characterized in that
(a) the mounting support (10) is formed as a semiproduct by two side plates (12) held together by two crossmembers (14,16) guiding the inserted stem (20) on two sides;
and (b) in that a first crossmember, formed as a semiproduct, connecting the side plates (12) takes the shape of a cylindrical bolt (16) in mid-position or the shape of a cross plate (19) with a recess (24a), both preferably positioned below the inserted stem while the crossmember acts as a locking face (cf 18,18a) in conjunction with a bracing face (25,25a) on the stem shaped accordingly by a recess (24) or an offshoot (16a) and also positioned at right angles to the longitudinal axis of the stem (20);
and (c) in that in operating position the push rod (26) with its wedge surface (28) abuts to a second crossmember (14,14a,14b) - also connecting the two side plates, preferably positioned above the inserted stem - (12) with at least one counterface (15a,15b).

2. Trailer coupling according to claim 1. characterized in that one crossmember is shaped as a cross plate (14) and that in operating position the wedge surface (28) of the push rod (26) touches the underside (15) of the cross plate (14) only in its front and rear area.

3. Trailer coupling according to claims 1. or 2. characterized in that the axis of rotation of the push rod (26) is not parallel with the axis (29) of the stem (20) but is positioned at an angle to it.

4. Trailer coupling according to one of claims 1. to 3. characterized in that two crossbolts (14a,14b) with two counterfaces (15a,15b) corresponding to the wedge surface (28) are used instead of the cross plate (14) (cf. Fig. 4).

5. Trailer coupling according to claim 4. characterized in that cylindrical bolts are used.

6. Trailer coupling according to one of claims 1. to 3. characterized in that the side plates (12) are conntected to each other along the remaining sides of the stem (20) by one cross plate (14,19) each, the cross plate (19) featuring a recess (24a) which, in operating position, embraces the crossmmember (16a) which, in this case, is situated on the stem (20). (cf Fig. 3.)

7. Trailer coupling according to one of the previously stated claims characterized in that the crossmember (16,16a), which is situated opposite the push rod (26) and of semi-circular cross-section and flattened, is embraced by a recess (24,24a) of semi-circular cross-section in the stem (20). (cf Fig. 1.)

8. Trailer coupling according to claim 7. characterized in that the crossmember (16,16a) is embraced by a recess (24,24a) of trapezoid (not semi-circular) cross-section, thus forming a front and rear (or an upper and lower) bearing surface. (cf Fig. 2.,3., and 4.)

9. Trailer coupling according to one of the claims 4. or 5. characterized in that the push rod (26) in operating position touches only one of the crossbolts (14,14a), preferably crossbolt (14a) thus forming a first counterface (15a) while a second counterface (15b) is formed by direct contact of the stem (20) with the second crossbolt. (cf Fig. 5.)

10. Trailer coupling according to claim 9. characterized in that the push rod (26) protrudes beyond the outer shape of the stem (20) only in the stem-end area.

11. Trailer coupling according to one of the previously stated claims characterized in that both the push rod (26) and its corresponding slot in the stem (20) are of trapezoid cross-section.

12. Trailer coupling according to one of the previously stated claims characerized in that the stem of the knee-joint bar is of square cross-section.

## Revendications

1. Attelage de remorque amovible, en particulier pour voitures de tourisme, comportant un élément de fixation (10) se montant de préférence caché à l'arrière de la voiture et destiné à la fixation amovible de la queue (20) d'une barre qui est pourvue d'une boule d'attelage et présente des organes d'arrêt, y compris une barre coulis sante (26) guidée le long de la queue (20) et chargée par un ressort en direction de l'extrémité de la queue, la queue de barre à boule (20) ayant une surface de serrage s'étendant perpendiculairement à son axe longitudinal et s'appliquant derrière une surface d'arrêt correspondante (18, 18a) de l'élément de fixation (10), et la barre coulis sante (26) étant placée sur le côté de la queue (20) opposé à cette surface d'arrêt (18, 18a) et présentant une tête qui monte sur une contre-surface (15, 15a, 15b) de l'élément de fixation (10) dans la direction de charge du ressort, se rétrécit vers l'extrémité de la barre coulissante et est pourvue d'une surface inclinée (28), caractérisé par le fait
(a) que l'élément de fixation (10) est du type demi-produit et constitué de deux joues (12) tenues ensemble par des corps transversaux (14, 16) et guidant sur deux côtés la queue (20) engagée,
(b) qu'un premier corps transversal du type demi-produit réunissant les joues (12) est prévu sous la forme d'un boulon rond (16) placé à peu près au milieu, ou sous la forme d'une plaque transversale (19) présentant un évidement (24a), de préférence s'étendant chacun au-dessous de la queue à recevoir, le corps transversal formant une surface d'arrêt (voir 18, 18a) qui est associée fonctionnellement à une surface de serrage (25, 25a) de forme correspondante s'étendant sur la queue (20) également perpendiculairement à la direction longitudinale et de mouvement de celle-ci et formée par un évidement (24) ou une protubérance (16a),
(c) que la barre coulissante (26), en position de service, s'appuie par sa surface inclinée (28) sur un deuxième corps transversal (14, 14a, 14b) également du type semi-produit réunissant les joues (12) et s'étendant de préférence au dessus de la queue à recevoir, sur au moins une contre surface correspondante (15, 15a, 15b).

2. Attelage de remorque selon la revendication 1, caracté risé par le fait qu'un corps transversal est constitué d'une plaque transversale (14) et la surface inclinée (28) de la barre coulissante (26), en position de service, s'appuie seulement dans sa partie avant et sa partie arrière sur la face inférieure (15) de cette plaque transversale (14).

3. Attelage de remorque selon l'une des revendications 1 et 2, caractérisé par le fait que l'axe de mouvement de la barre coulissante (26) n'est pas parallèle à l'axe (29) de la queue (20), mais incliné par rapport à celui-ci.

4. Attelage de remorque selon l'une des revendications 1 à 3, caractérisé par le fait qu'au lieu de la plaque transversale (14) sont prévus deux boulons transversaux (14a, 14b) ayant deux contre-surfaces (15a, 15b) correspon dant à la surface inclinée (28) (voir la fig. 4).

5. Attelage de remorque selon la revendication 4, caracté risé par le fait qu'il est prévu des boulons ronds.

6. Attelage de remorque selon l'une des revendications 1 à 3, caractérisé par le fait que les joues (12) sont réunies le long de chacun des deux côtés restants de la queue (20) par une plaque transversale (14, 19), une plaque transversale (19) ayant un évidement (24a) qui, en position de service, enserre le corps transversal (16a) prévu dans ce cas sur la queue (20) (voir la fig. 3).

7. Attelage de remorque selon l'une des revendications précédentes, caractérisé par le fait que le corps transversal (16, 16a) opposé à la barre coulissante (26) a une section en forme de partie de cercle et un plat et est enserré par un évidement (24, 24a) de section à peu près semi-circulaire fait dans la queue (20).

8. Attelage de remorque selon la revendication 7, caracté risé par le fait que le corps transversal (16, 16a) est enserré, avec formation d'une surface d'appui avant et arrière ou supérieure et inférieure, par un évidement (24, 24a) de section trapézoïdale (au lieu d'une section semi circulaire) (voir les fig. 2, 3 et 4).

9. Attelage de remorque selon l'une des revendications 4 et 5, caractérisé par le fait que la barre coulissante (26), en position de service, ne s'appuie que sur un des boulons transversaux (14a, 14b), de préférence sur ce boulon (14a) avec formation d'une première contre-surface (15a), tandis qu'une deuxième contre-surface (15b) est formée par appui direct de la queue (20) sur le deuxième boulon transversal (voir la fig. 5).

10. Attelage de remorque selon la revendication 9, caracté risé par le fait que la barre coulissante (26) dépasse du contour extérieur de la queue (20) seulement dans la zone de l'extrémité de celle-ci.

11. Attelage de remorque selon l'une des revendications précédentes, caractérisé par le fait que la barre coulis sante (26) et la rainure affectée à elle faite dans la queue (20) ont chacune une section trapézoïdale.

12. Attelage de remorque selon l'une des revendications précédentes, caractérisé par le fait que la queue de barre à boule (20) est constituée d'un carré.
